Europäisches Patentamt

European Patent Office

Office européen des brevets

(19)

(11) Veröffentlichungsnummer: **0 157 325**
**B1**

(12) **EUROPÄISCHE PATENTSCHRIFT**

(45) Veröffentlichungstag der Patentschrift:
14.09.88

(21) Anmeldenummer: 85103504.8

(22) Anmeldetag: 25.03.85

(51) Int. Cl.⁴: **G 03 B 27/40**, G 03 B 27/46,
G 03 B 27/54

(54) **Fotografisches Rollenkopiergerät.**

(30) Priorität: 04.04.84 DE 3412692
04.04.84 DE 3412690

(43) Veröffentlichungstag der Anmeldung:
09.10.85 Patentblatt 85/41

(45) Bekanntmachung des Hinweises auf die Patenterteilung:
14.09.88 Patentblatt 88/37

(84) Benannte Vertragsstaaten:
CH DE FR IT LI

(56) Entgegenhaltungen:
DD - A - 120 315
DE - A - 2 411 934
DE - A - 3 023 414
DE - B - 1 281 835
DE - B - 1 953 015
DE - B - 2 238 944
US - A - 4 077 716

(73) Patentinhaber: Agfa-Gevaert AG, Patentabteilung,
D-5090 Leverkusen 1 (DE)

(72) Erfinder: Freitag, Friedbert, Dipl.-Ing.,
Wilmannstrasse 26, D-8025 Unterhaching (DE)
Erfinder: Hujer, Friedrich, Dipl.-Ing., Tulpenweg 8,
D-8067 Petershausen (DE)
Erfinder: Nagel, Erich, Dipl.-Ing., Amselweg 2,
D-8011 Anzing (DE)
Erfinder: Payrhammer, Bernd, Oettingenstrasse 40,
D-8000 München 22 (DE)
Erfinder: Zahn, Wolfgang, Dr., Landfriedstrasse 1,
D-8000 München 90 (DE)

## Beschreibung

Die Erfindung betrifft ein fotografisches Rollenkopiergerät nach dem Oberbegriff des beiliegenden Anspruchs 1.

Durch das Einfließen von Kameras mit dem sogenannten Halbformat 18 × 24 mm auf sogenannten Kleinbildfilmen und durch organisatorische Änderungen in Kopieranstalten durch das Zusammenkleben von unentwickelten Filmen zu langen Bändern ist das Problem entstanden, daß aus vielen Filmen bestehende Filmbänder oft Filme mit unterschiedlicher Vorlagegröße enthalten. Aus der deutschen Patentschrift 19 53 015 ist bereits ein Rollenkopiergerät bekannt, das zum Kopieren einer Vorlagenrolle, die Filme unterschiedlichen Vorlagenformats enthält, eine automatische Einsteuerung des Bildfensters auf die jeweilige Vorlagengröße entsprechend den Markierungen am Filmrand oder am Filmanfang zuläßt. Die dort beschriebene Vorgehensweise hat jedoch zur Folge, daß bei konstant gehaltenem Abbildungsmaßstab von den sogenannten Halbformatvorlagen der Abmessung 18 × 24 mm auch nur halb so große Kopien gezogen werden wie von den Kleinbildvorlagen mit den Abmessungen 24 × 36 mm. Dieses Ergebnis ist jedoch für die Fotofreunde unbefriedigend.

Aufgabe der Erfindung ist es deshalb, ein Rollenkopiergerät so auszubilden, daß auch von unterschiedlich großen Kopiervorlagen gleich große, an die Breite des Kopiermaterialbandes angepaßte Kopien erzielt werden.

Diese Aufgabe wird gelöst durch die in dem beiliegenden Anspruch 1 beschriebene Erfindung. Bei der erfindungsgemäßen Lösung werden zwar zwei Abbildungssysteme benötigt, deren Abbildungsmaßstab jeweils so bemessen ist, daß die zugehörige Vorlage in der gewünschten Größe auf das Papierband abgebildet wird. Die Abbildung der kleineren, zur Filmlängsrichtung quer liegenden Vorlagen erfolgt über einen Satz Drehprismen, insbesondere Porro-Prismen, die eine Bilddrehung um 90° erzeuen. Diese auch für diesen Zweck bekannten Drehprismen bringen normalerweise jedoch einen Versatz mit sich, der zusätzliche Umstellschwierigkeiten verursacht. Bei den erfindungsgemäßen Lösungen ist jedoch entweder eine zusätzliche Einrichtung mit zwei schrägen, parallelen, spiegelnden Flächen vorgesehen, die das Bild gerade um einen Betrag entgegen dem Versatz durch die Drehprismen versetzen, oder zwei gegeneinander versetzte Bildfenster. Diese bringen die Bildachse wieder zur Deckung mit der optischen Achse des Abbildungssystems ohne Drehprismen. Die Verlängerung der optischen Weglänge durch die Drehprismen und das Doppelprisma mit den beiden spiegelnden Flächen werden bei der Auslegung des Objektivs für dieses System berücksichtigt.

Nach einer Ausgestaltung der Erfindung wird das Lampenhaus umstellbar gestaltet, derart, daß mit dem Umstellvorgang jeweils der gesamte Lichtstrom auf das entsprechende Bildfenster geleitet wird.

Weitere Einzelheiten und Vorteile der Erfindung ergeben sich aus den Unteransprüchen im Zusammenhang mit der Beschreibung eines Ausführungsbeispiels, das anhand von Figuren eingehend erläutert ist. Es zeigen:

Fig. 1 ein erfindungsgemäßes Rollenkopiergerät in einer schematisierten Frontansicht,

Fig. 2 einen Teilschnitt durch das Gerät gemäß Fig. 1 längs der Schnittlinie II–II,

Fig. 3 eine andere Ausführungsform der Erfindung mit zwei versetzten Bildfenstern in der Frontansicht und

Fig. 4 einen Teilschnitt durch das Gerät gemäß Fig. 3 längs der Schnittlinie IV–IV.

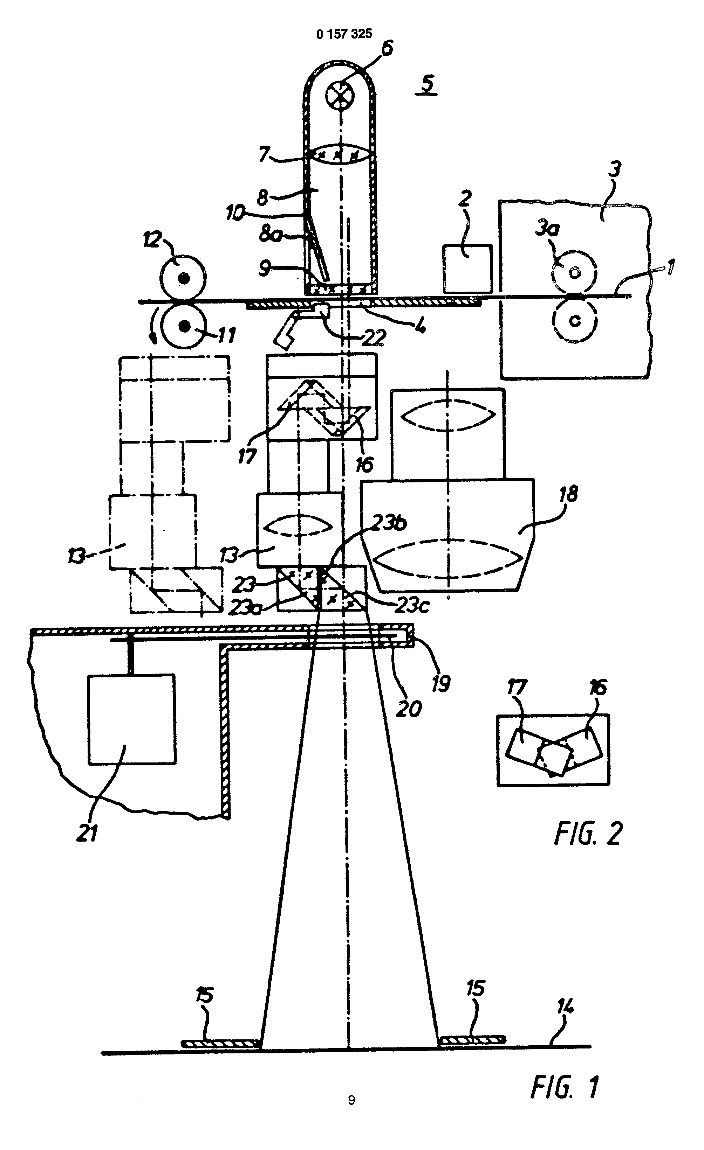

In Fig. 1 ist mit 1 ein Filmband bezeichnet, das in z.B. aus der deutschen Patentschrift 19 53 015 bekannter Weise aus einer Vielzahl einzelner Filme zusammengeklebt ist und in dem Filme mit unterschiedlichen Vorlagenformaten, nämlich 24 × 36 mm und 18 × 24 mm, enthalten sind. Jeder Bildvorlage sind am Rand in bestimmtem Abstand zur vorlaufenden Bildkante Kerben zugeordnet, die zum Transport in die Kopierposition mechanisch oder fotoelektrisch abtastbar sind. Das Vorlagenband kann in ebenfalls bekannter Weise jeweils an der Klebestelle eine besondere Markierung aufweisen, die automatisch abtastbar ist und ein Signal für das in dem nachfolgenden Film aufzufindende Vorlagenformat gibt. Sowohl der Abstand aufeinanderfolgender Bildkerben gemäß der deutschen Patentschrift 19 53 015 als auch eine Abtastung einer Formatkennung an der Klebestelle kann an einer Abtaststation 2 längs des Filmweges erfolgen. Vor dieser Abtasteinrichtung 2 ist noch eine Reinigungseinrichtung 3 mit rotierenden Bürsten 3a angeordnet, die dem Film anhaftenden Staub vor dem Kopiervorgang entfernen.

In Transportrichtung des Filmes in Fig. 1 von rechts nach links folgt nun die eigentliche Kopierstation mit einer Auflageplatte, die ein Bildfenster 4 aufweist; dieses entspricht in seiner Größe dem größeren, in Bildlängsrichtung liegenden Format 24 × 36 mm. Für das kleinere, querliegende Format mit 18 × 24 mm wird außermittig der der Abtasteinrichtung 2 zugewendete Teil des Bildfensters genutzt. Der bei dem kleineren Format nicht genutzte Teil des Bildfensters wird in diesem Fall durch eine schwenk- oder verschiebbare Klappe 22 verschlossen. Über dem Bildfenster 4 ist eine Beleuchtungseinrichtung 5 vorgesehen, in der das Licht einer Kopierlampe 6, unterstützt durch einen Reflektor, durch eine Kondensorlinse 7, in einen Mischschacht 8 geworfen wird. Solch ein Mischschacht kann z.B. als Spiegelschacht ausgebildet sein, der in seiner Querschnittsfläche etwa dem Vorlagenformat entspricht und an seiner der Bildvorlage zugekehrten, unteren Seite eine Streuscheibe 9 aufweist. Der Schacht entspricht in seinem Querschnitt etwa der Kleinbildgröße. Die über der Klappe 22 liegende Wand 8a des Schachtes 8 ist an ihrem oberen Ende um eine Achse 10 parallel zur Vorlagenebene und senkrecht zur Vorlagentransportrichtung schwenkbar gelagert, derart, daß sie aus der quaderförmigen Schachtform für Kleinbildvorlagen heraus in eine ausgezogen dargestellte schräge Stellung überführbar ist, in der die Unterkante der Schachtwand etwa über der Mitte des Bildfensters 4 liegt. In dieser Stellung wird praktisch der gesamte Lichtstrom der Lampe 6 gut homogenisiert durch den Spiegelschacht 8 auf die Streuscheibe über dem Bildfensterabschnitt für das Halbformat geleitet.

Dieser Versatz ist abhängig von den Abmessungen der Prismen 16, 17, die ihrerseits durch den Querschnitt des abbildenden Strahlenganges im Bereich der Prismen vorgegeben sind.

Um nun auf das Kopiermaterial 14 in derselben Position Halbformatbilder aufbelichten zu können wie Bilder von Vorlagen des Formates 24 × 36 mm, ist unter dem Objektiv 13 ein sogenanntes Doppelprisma 23 angeordnet, das zwar aus einem einstückigen Glaskörper besteht, dessen Wirkung aber am besten anhand der Elemente zu erläutern ist: der Austrittsfläche des Objektives 13 zugekehrt ist die Eintrittsfläche eines ersten gleichschenklig-rechtwinkligen Prismas 23a, dessen reflektierende Diagonale unter 45° zum Strahlengang geneigt ist. Der in horizontale Richtung umgelenkte Strahl gelangt durch eine planparallele Glasplatte 23b geeigneter Dicke in das zweite Prisma 23c, das an seiner reflektierenden Diagonalfläche die Bildachse in den Diagonalen-Schnittpunkt des von den Masken 15 begrenzten Belichtungsfensters umlenkt.

Am Filmweg weiter nach links sind zwei Transportrollen 11 und 12 angeordnet, die jeweils nach einem Kopiervorgang für den Transport des Vorlagenstreifens Sorge tragen. Die genaue Positionierung der Bildvorlagen erfolgt gesteuert durch die Abtastung der Randkerben, so, daß die Vorlagen jeweils nach Format in den richtigen Teil des Bildfensters 4 gebracht werden.

Zur Abbildung der in dem Bildfenster 4 stehenden Vorlagen sind folgende Mittel vorgesehen:

Sogenannte Halbformatvorlagen im Bildfenster 4 werden durch ein Objektiv 13 auf ein Band von lichtempfindlichem Kopiermaterial 14 abgebildet, wobei die für die Belichtung offenliegende Kopiermateriallänge durch Masken 15 in Bandtransportrichtung begrenzt ist.

Zwischen dem Bildfenster 4 und dem Objektiv 13 befindet sich ein Satz Drehprismen, sogenannte Porro-Prismen 16, 17, die den Bildstrahl viermal um jeweils 90° abwinkeln. Dabei erfogt durch die Anordnung der Prismen zueinander unter einem Winkel von 135° gemäß Fig. 2 eine Verdrehung des Bildes um 90°. Mit dieser Drehung durch viermalige Reflexion ist aufgrund der Horizontalkomponenten des Bildstrahles ein Versatz des Bildes in Richtung des Vorlagentransportes verbunden. Die im Bildfenster 4 stehende, mit ihrer Längsrichtung quer zur Vorlagenbandlängsrichtung angeordnete Kopiervorlage wird deshalb nach der Drehung durch die Prismen 16, 17 durch das Objektiv 13 auf das Kopiermaterialband 14 so abgebildet, daß die Längsrichtung des Formates auch in Papierlängsrichtung verläuft. Der Abbildungsmaßstab durch das Objektiv ist so bestimmt, daß die Kopie mit ihrer kleineren Breitenabmessung gerade die Breite des Kopiermaterialbandes ausfüllt.

Zum Kopieren von normal großen Vorlagen entsprechend den Abmessungen des Bildfensters 4 ist jedoch eine Umstellung erforderlich. Das Objektiv 13 mit den beiden Drehprismen 16, 17 wird in einer geeigneten Führung durch bekannte Mittel, wie z.B. Schrittmotore, nach links in die gestrichelt gezeichnete Stellung verfahren, während ein Objektiv 18 bekannter Bauart aus der ausgezogen gezeichneten Stellung rechts außerhalb des Strahlengangs ebenso weit nach links verfahren wird, bis sich die Achse des Objektivs 18 mit der Achse des Lampenhauses 8 deckt. Zum Kopieren von Vorlagen des Formates 24 × 36 mm ist die Schachtwand 8a in die gestrichelt gezeichnete, senkrechte Stellung zu verschwenken, so daß der gesamte Lichtstrom des Kondensors 7 durch den Mischschacht 8 auf die Streuscheibe 9 oberhalb des Bildfensters 4 fällt. Das Objektiv 18, das z.B. ein Varioobjektiv bekannter Bauart sein kann, bildet dann die Vorlage im Fenster 4, deren Längsrichtung in Bandlängsrichtung verläuft, ohne Drehprismen in Längsrichtung auf das Kopiermaterialband 14 dessen Breite füllend ab.

Um ein Kopieren mit sehr kurzen Belichtungszeiten zu ermöglichen, ist unterhalb der Objektive 13 bzw. 18 in wirksamer Stellung ein Verschluß 19 vorgesehen, bestehend aus einer Verschlußlamelle 20 und einem Drehmagneten 21, der jeweils zum Beenden eines Kopiervorganges die Lamelle in den Strahlengang einschwenkt.

Die Wirkungsweise des beschriebenen Grätes ist wie folgt: nach dem Einlaufen eines neuen Filmanfangs mit einem Vorlaufband durch die Reinigungseinrichtung 3 bis zu den Transportwalzen 11, 12 gelangt der Anfang des ersten Films unter die Abtasteinrichtung 2. Dort wird das Vorlagenformat in dem nunmehr folgenden Film bestimmt, das z.B. ausgehend von der in Fig. 1 gezeigten Stellung das normale Kleinbildformat entsprechend dem ganzen Bildfenster 4 sei. Durch die entsprechenden motorischen Verstellmittel wird das Objektiv 13 mit den Drehprismen 16,17 in die gestrichelt gezeichnete Stellung verfahren, während gleichzeitig das Normalobjektiv 18 mit seiner Achse in Deckung mit der Achse des Mischschachts 8 gebracht wird. Gleichzeitig wird die verschwenkbare Schachtwand 8a in die gestrichelt gezeichnete, senkrechte Stellung übergeführt. Ferner wird die Klappe 22 in die gestrichelt gezeichnete Stellung weggeschwenkt. Die im Fenster 4 positionierte Kleinbildvorlage wird dann im wesentlichen mit dem gesamten Lichtstrom aus dem Kondensor 7 durchleuchtet und durch das Objektiv 18 auf das Kopiermaterialband 14 abgebildet, solange der Verschluß 19 geöffnet ist. In bekannter Weise werden dann sämtliche Vorlagen dieses Filmes kopiert, jeweils unter Weitertransport des Kopiermaterialbandes 14 durch bekannte Mittel.

Mit dem Einlaufen der nächsten Klebestelle in die Abtaststation 2 wird das Format der Kopiervorlagen in dem nächsten Film abgtastet und überprüft, ob die Kopiervorrichtung auf dieses Format eingestellt ist. Ausgehend von dem vorbeschriebenen Beispiel der Einstellung auf das Normalformat gemäß dem ganzen Kopierfenster 4 sei bei einem nunmehr folgenden Film mit Vorlagen des Formates 18 × 24 mm ein Umstellvorgang in umgekehrter Richtung durchzuführen. Das Objektiv 18 wird hierzu in die ausgezogen gezeichnete Stellung verbracht, das Objektiv 13 in die ebenfalls ausgezogen gezeichnete Stellung. Die verschwenkbare Schachtwand 8a ist in die schrägstehende Stellung zu bringen; die erste Kopiervorlage des Halbformates wird durch eine entsprechende Änderung der Vorschubmittel, z.B. durch Vorgabe einer anderen Anzahl der Schritte von der Abtaststation 2 bis in die richtige Position in Zuordnung zum Bildfenster 4 gesteuert. Das Bild dieser Vorlage wird durch die Prismen 16, 17 um 90° gedreht. Die Abbildung durch das Objektiv 13 und das Doppelprisma 23 führt dann zu einer formatfüllenden Kopie, die in Längsrichtung des Bandes 14 verläuft.

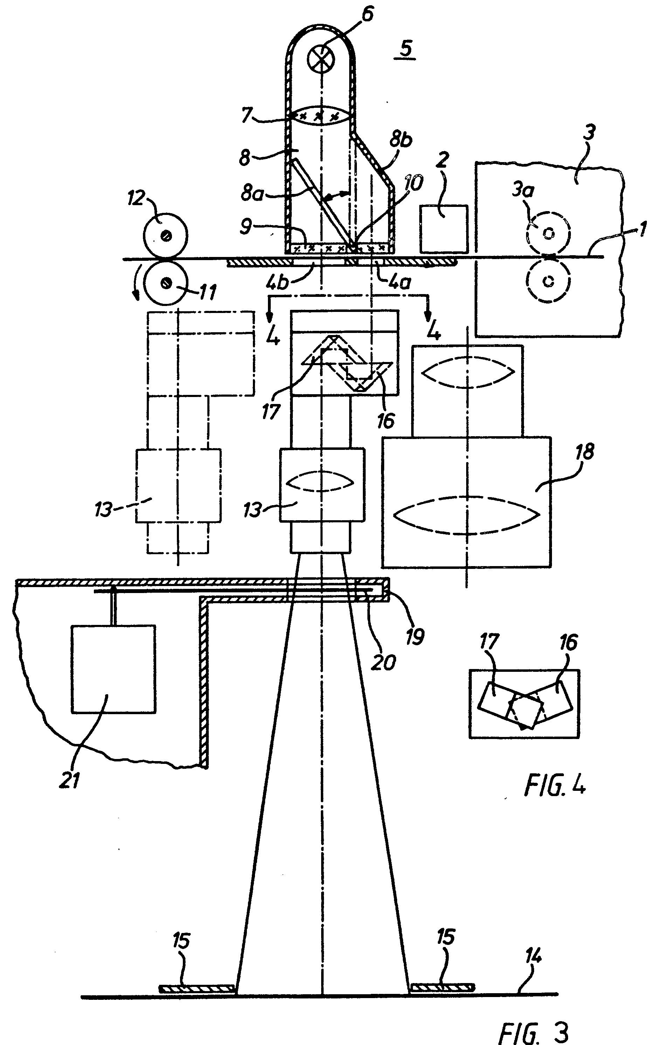

Eine andere Ausführungsform der Erfindung ist in den Figuren 3 und 4 dargestellt. Funktionell gleiche Elemente haben dieselben Bezugszeichen wie in Fig. 1 und 2. Es werden im folgenden vor allem abweichende Elemente beschrieben.

Die Auflageplatte für die Vorlagen weist nebeneinander zwei Öffnungen, die Bildfenster 4a und 4b, auf. Das Bildfenster 4a entspricht dabei in seiner Größe dem Vorlagenformat 18 × 24 mm, während das Bildfenster 4b dem Vorlagenformat 24 × 36 mm angepaßt ist. Über den beiden Bildfenstern ist die Beleuchtungseinrichtung 5 vorgesehen, in der das Licht der Kopierlampe 6, eventuell unterstützt durch einen nicht dargestellten Reflektor, durch eine Kondensorlinse 7, in einen Mischschacht 8 geworfen wird. Dieser ist als Spiegelschacht ausgebildet, der in seiner Querschnittsfläche etwa dem Vorlagenformat entspricht und an seiner der Bildvorlage zugekehrten, unteren Seite eine Streuscheibe 9 aufweist.

Im vorliegenden Fall mit den zwei Bildfenstern 4a und 4b entspricht der Schacht in seinem Querschnitt der Kleinbildgröße 24 × 36 mm, wobei die dem Halbformatfenster 4a benachbarte Schachtwand 8a nicht starr, sondern um eine zwischen den beiden Bildfenstern 4a und 4b verlaufende Achse 10 schwenkbar angeordnet ist. Die Achse 10 ist zur Vorlagenebene parallel und verläuft senkrecht zur Transportrichtung des Vorlagenstreifens 1. In der gestrichelt gezeichneten Stellung vervollständigt die Schachtwand 8a mit ihrer spiegelnden Innenseite den Spiegelschacht 8 für das Bildfenster 4b, während in der dick gezeichneten Stellung die auch auf der anderen Seite verspiegelte Schachtwand 8a das von oben kommende Licht zur Seite hin ablenkt in einen Lampenhausfortsatz 8b, der in seinem unteren Teil etwa das Bildfenster 4a überdeckt. Auch der Lampenhausfortsatz 8b ist auf seiner Innenseite vollständig verspiegelt, so daß das vom Kondensor 7 kommende Licht durch die verspiegelte, nach oben gerichtete Fläche der Schachtwand 8a umgelenkte Licht durch vielfältige Reflexion gut homogenisiert und gemischt auf die Streuscheibe 9 oberhalb des Bildfensters 4a trifft.

Zur Abbildung der in den Bildfenstern 4a bzw. 4b stehenden Vorlagen sind folgende Mittel vorgesehen:

Sogenannte Halbformatvorlagen im Bildfenster 4a werden wie bei Fig. 1 durch das Objektiv 13 und die Porro-Prismen 16, 17 auf das Kopiermaterial 14 abgebildet. Der Abbildungsmaßstab durch das Objektiv ist so bestimmt, daß die Kopie mit ihrer kleineren Breitenabmessung gerade die Breite des Kopiermaterialbandes ausfüllt.

Zum Kopieren von normal großen Vorlagen entsprechend den Abmessungen des Bildfensters 4b dient das Objektiv 18. Zum Kopieren von Vorlagen des Formates 24 × 36 mm ist die Schachtwand 8a in die gestrichelt gezeichnete, senkrechte Stellung zu verschwenken, so daß der gesamte Lichtstrom des Kondensors 7 durch den Mischschacht 8 auf die Streuscheibe 9 oberhalb des Bildfensters 4b fällt. Das Objektiv 18, das z.B. ein Varioobjektiv bekannter Bauart sein kann, bildet dann die Vorlage im Fenster 4b, deren Längsrichtung in Bandlängsrichtung verläuft, ohne Drehprismen in Längsrichtung auf das Kopiermaterialband 14 dessen Breite füllend ab.

Die Wirkungsweise des beschriebenen Gerätes ist wie folgt: nach dem Einlaufen eines neuen Filmanfangs mit einem Vorlaufband durch die Reinigungseinrichtung 3 bis zu den Transportwalzen 11, 12 gelangt der Anfang des ersten Films unter die Abtasteinrichtung 2. Dort wird das Vorlagenformat in dem nunmehr folgenden Film bestimmt, das z.B. ausgehend von der in Fig. 3 gezeigten Stellung das normale Kleinbildformat entsprechend dem Bildfenster 4b sei. Durch die entsprechenden motorischen Verstellmittel wird das Objektiv 13 mit den Drehprismen 16, 17 in die gestrichelt gezeichnete Stellung verfahren, während gleichzeitig das Normalobjektiv 18 mit seiner Achse in Deckung mit der Achse des Mischschachts 8 gebracht wird. Gleichzeitig wird die verschwenkbare Schachtwand 8a in die gestrichelt gezeichnete, senkrechte Stellung übergeführt. Die im Fenster 4b positionierte Kleinbildvorlage wird dann im wesentlichen mit dem gesamten Lichtstrom aus dem Kondensor 7 durchleuchtet und durch das Objektiv 18 auf das Kopiermaterialband 14 abgebildet, solange der Verschluss 19 geöffnet ist. In bekannter Weise werden dann sämtliche Vorlagen dieses Filmes kopiert, jeweils unter Weitertransport des Kopiermaterialbandes 14 durch bekannte Mittel.

Mit dem Einlaufen der nächsten Klebestelle in die Abtaststation 2 wird das Format der Kopiervorlagen in dem nächsten Film abgetastet und überprüft, ob die Kopiervorrichtung auf dieses Format eingestellt ist. Ausgehend von dem vorbeschriebenen Beispiel der Einstellung auf das Normalformat gemäß Kopierfenster 4b sei bei einem nunmehr folgenden Film mit Vorlagen des Formates 18 × 24 mm ein Umstellvorgang in umgekehrter Richtung durchzuführen. Das Objektiv 18 wird hierzu in die ausgezogen gezeichnete Stellung verbracht, das Objektiv 13 in die ebenfalls ausgezogen gezeichnete Stellung mit Deckung der Achse des Objektivs 13 mit der Achse des Mischschachts 8. Die verschwenkbare Schachtwand 8a ist in die schrägstehende Stellung zu bringen; die erste Kopiervorlage des Halbformates wird durch eine entsprechende Änderung der Vorschubmittel, z.B. durch Vorgabe einer anderen Anzahl der Schritte von der Abtaststation 2 bis in die richtige Position in Zuordnung zum Bildfenster 4a gesteuert. Das Bild dieser Vorlage wird durch die Prismen 16, 17 um 90° gedreht. Die Abbildung durch das Objektiv 13 führt dann zu einer formatfüllenden Kopie, die in Längsrichtung des Bandes 14 verläuft.

Die Erfindung wird auch nicht verlassen, wenn z.B. ein weiteres Format, z.B. das quadratische Format, mit verarbeitet werden soll, wozu das Objektiv 18 ebenfalls Verwendung finden kann. Die Belichtung würde ebenfalls durch das Belichtungsfenster 4b stattfinden, wobei das Fenster an beiden Rändern noch zu beschneiden wäre. In gleicher Weise ist auch eine Belichtung durch ein starres Objektiv anstelle des Varioobjektivs 18 möglich, wenn nur grob gestufte unterschiedliche Abbildungsmaßstäbe für Vorlagen des Formats 24 × 36 mm kopiert werden sollen.

Die beiden Abbildungssysteme 13 und 18 können auch auf einem einzigen, motorisch verfahrbaren Schlitten in starrem, dem Verschiebeweg entsprechenden Abstand angeordnet sein.

Die Erfindung ist auch anwendbar, wenn die Kopien auf ein in seiner Breite der Bildlänge entsprechendes Kopiermaterialband quer liegend aufbelichtet werden. Das Drehprisma ist dann an dem Objektiv für die Vorlagen des Formates 24 × 36 mm vorzusehen. Gleichzeitig ist die Lage der Kopierfenster zu vertauschen.

**Patentansprüche**

1. Fotografisches Rollenkopiergerät zur Abbildung von Kopiervorlagen unterschiedlicher Seitenlänge auf ein bandförmiges Kopiermaterial, dessen Bandbreite einer gewünschten Kopieabmessung entspricht, wobei die Kopiervorlagen in Bandform angeordnet sind und unterschiedliche Formate aufweisen, von denen das eine in Bandlängsrichtung, das andere quer dazu angeordnet ist, dadurch gekennzeichnet, daß zwei Abbildungssysteme (13, 18) mit unterschiedlichem, von den beiden Vorlagenformaten eine einheitliche Kopiengröße ermöglichenden Abbildungsmaßstab gegeneinander austauschbar in den Abbildungsstrahlengang bewegbar sind, von denen das eine (13) für die eine Vorlagenart ein strahlenversetzendes Drehprisma, insbesondere ein Paar Porro-Prismen (16, 17), für eine Bilddrehung um 90° enthält und für dieses Abbildungssystem mit Drehprisma (16, 17) eine Einrichtung (23) zum Erzielen eines Parallelversatzes vorgesehen ist, die die Abbildung entgegen der Richtung des Versatzes durch das Drehprisma zur Deckung mit dem Strahlengang des Abbildungssystems (18) ohne Drehprisma zurückversetzt.

2. Rollenkopiergerät nach Anspruch 1, dadurch gekennzeichnet, daß die Einrichtung zum Erzielen eines Parallelversatzes ein Rhombusprisma (23a, b, c) enthält.

3. Rollenkopiergerät nach Anspruch 1 oder 2, dadurch gekennzeichnet, daß bei Aufbelichtung der Kopien auf dem Band (14) in Bandlängsrichtung das Abbildungssystem (13) für die querliegenden, kleineren Vorlagen das Drehprisma (16, 17) enthält.

4. Rollenkopiergerät nach einem der vorangehenden Ansprüche, dadurch gekennzeichnet, daß nur ein Kopierfenster (4) für wenigstens zwei Vorlagenformate vorgesehen ist und daß für das kleinere, zum Vorlagenband querliegende Format der dem zugehörigen Abbildungssystem (13) abgewendete Teil des Kopierfensters (4) nutzbar und der restliche Teil durch einen Schieber oder eine Klappe (22) verschließbar ist.

5. Rollenkopiergerät nach Anspruch 4, dadurch gekennzeichnet, daß ein Lampenhaus (5) mit einem Spiegelschacht (8) vorgesehen ist, dessen Austrittsfläche etwa dem größeren Format entspricht und dessen eine Schachtwand (8a) am oberen Ende um eine zur Vorlagenebene parallele Achse (10) schwenkbar ist in eine Stellung, in der sie das Licht auf das kleinere Format konzentriert.

6. Rollenkopiergerät nach Anspruch 1, dadurch gekennzeichnet, daß als Einrichtung zum Erzielen eines Parallelversatzes der beiden Abbildungen in der Vorlagenbühne zwei zueinander in Bandlaufrichtung versetzte Bildfenster (4a, 4b) entsprechend den unterschiedlichen Vorlagenformaten vorgesehen sind, deren Versatz gerade dem Versatz des Strahlengangs durch das Drehprisma (16, 17) entspricht.

7. Rollenkopiergerät nach Anspruch 6, dadurch gekennzeichnet, daß die beiden Bildfenster (4a, 4b) durch eine gemeinsame Beleuchtungseinrichtung (5) ausgeleuchtet sind.

8. Rollenkopiergerät nach Anspruch 7, dadurch gekennzeichnet, daß die Beleuchtungseinrichtung (5) von dem einen (4a) auf das andere Bildfenster (4b) umschaltbar oder die gesamte Beleuchtungseinrichtung um den Versatz verschiebbar ist.

9. Rollenkopiergerät nach Anspruch 7 oder 8, dadurch gekennzeichnet, daß die Beleuchtungseinrichtung (5) einen an die Bildfenster (4a, 4b) heranreichenden Spiegelschacht (8) umfaßt, der zum Umschalten einen doppelseitig verspiegelten, um eine zwischen den beiden Bildfenstern (4a, 4b) liegende Achse (10) von der Anlage an der einen Schachtwand zur Anlage an der gegenüberliegenden Schachtwand verschwenkbaren Schachtteiler (8a) aufweist.

10. Rollenkopiergerät nach einem der Ansprüche 7 bis 9, dadurch gekennzeichnet, daß der Spiegelschacht (8) in Bandlaufrichtung unsymmetrisch ist, derart, daß der Schacht für das häufiger auftretende, größere Vorlagenformat rechtwinklig zylindrisch ist und das Licht für das seltenere, kleinere Vorlagenformat seitlich ausgelenkt wird.

11. Rollenkopiergerät nach einem der vorangehenden Ansprüche, dadurch gekennzeichnet, daß eine Abtasteinrichtung (2) für filmseitige Formatmarken oder den Abstand von Bildkerben vorgesehen ist, die über entsprechende Stellglieder den Austausch der Abbildungssysteme (13, 18), die Umstellung der beweglichen Spiegelschachtwand (8a) und die Positionierung der Vorlagen im jeweils benutzten Bildfenster (4, 4a, 4b) steuert.

**Claims**

1. Photographic roll printing apparatus for projecting printing originals of various side lengths on to a strip-form printing material, the strip width of which corresponds to a required print dimension, the printing originals being arranged in strip-like fashion and having different formats, one of which is arranged in the longitudinal direction of the strip and the other of which is arranged transversely thereto, characterised in that two projecting systems (13, 18) with different scales of projection allowing a uniform print size to be obtained from the two original formats can be interchangeably moved into the path of the projecting beam, one of which systems (13) contains, for the one type of original, a beam-displacing rotating prism, in particular a pair of Porro prisms (16, 17), for rotating an image by 90°, and a device (23) for obtaining parallel displacement is provided for this projecting system having the rotation prism (16,17), which device displaces the projection backwards counter to the direction of the displacement caused by the rotating prism so that the projection coresponds to the path of the beam of the projecting system (18) without the rotating prism.

2. Roll printing apparatus according to Claim 1, characterised in that the device for obtaining parallel displacement contains a rhombic prism (23a, b, c).

3. Roll printing apparatus according to Claim 1 or 2, characterised in that when exposing the prints on the strip (14) in the longitudinal direction of the strip the projecting system (13) for the transversely situated smaller originals contains the rotating prism (16, 17).

4. Roll printing apparatus according to one of the preceding claims, characterised in that only one printing aperture (4) is provided for at least two original formats and in that, for the smaller format situated transversely to the original strip, that part of the printing aperture (4) turned away from the corresponding projecting system (13) can be used and the remaining part can be closed by a slide or a flap (22).

5. Roll printing apparatus according to Claim 4, characterised in that a lamp housing (5) with a mirror shaft (8) is provided, the outlet area of which corresponds approximately to the larger format and the one shaft wall (8a) of which can be pivoted at its upper end about an axis (10) parallel to the plane of the original, into a position in which it concentrates the light on to the smaller format.

6. Roll printing apparatus according to Claim 1, characterised in that two image apertures (4a, 4b) which correspond to the different original formats and are displaced in relation to each other in the direction of travel of the strip and the displacement of which corresponds precisely to the displacement of the path of the beam by the rotating prism (16, 17), are provided as the device for obtaining parallel displacement of the two projections in the platform for the originals.

7. Roll printing apparatus according to Claim 6, characterised in that the two image apertures (4a, 4b) are illuminated by a common illuminating device (5).

8. Roll printing apparatus according to Claim 7, characterised in that the illuminating device (5) can be switched from the one (4a) to the other image aperture (4b) or the entire illuminating device can be displaced by the degree of displacement.

9. Roll printing apparatus according to Claim 7 or 8, characterised in that the illuminating device (5) comprises a mirror shaft (8) which extends up to the image apertures (4a, 4b) and, for the switching step, has a shaft divider (8a) which has a reflecting surface on both sides and can be pivoted about an axis (10) situated between the two image apertures (4a, 4b), from lying against the one shaft wall to lying against the opposite shaft wall.

10. Roll printing apparatus according to one of Claims 7 to 9, characterised in that the mirror shaft (8) is asymmetric in the direction of travel of the strip, whereby the shaft for the more frequently occurring larger original format is rectangularly cylindrical and the light for the less frequent smaller original format is deflected laterally.

11. Roll printing apparatus according to one of the preceding claims, characterised in that a scanning device (2) for format markings on the film or for the interval between image notches is provided which, by means of appropriate adjusting elements, controls the interchange of the projecting systems (13, 18), the switching of the movable mirror shaft wall (8a) and the positioning of the originals in the image aperture (4, 4a, 4b) used in each case.

**Revendications**

1. Appareil de tirage de pellicule photographique en bobine pour obtenir une reproduction d'originaux de différentes longueurs de côté, sur un matériau en forme de bande qui est utilisé pour le tirage et dont la largeur de bande correspond à une dimension désirée des tirages, étant précisé que les originaux sont disposés sous forme de bande et présentent des formats différents dont l'un est disposé dans la direction longitudinale de la bande et l'autre transversalement à cette direction, caractérisé en ce que deux systèmes de reproduction (13, 18), à échelle de reproduction différente permettant d'obtenir, des deux formats d'originaux, une dimension homogène de tirage, peuvent se déplacer sur le chemin du faisceau lumineux de reproduction et s'échanger entre eux, systèmes der reproduction dont l'un contient, pour l'un des types d'originaux, un prisme rotatif, en particulier une paire de prismes de Porro (16, 17), qui décale le faisceau lumineux pour donner une rotation de l'image de 90°; et en ce que, pour ce système de reproduction présentant des prismes rotatifs (16, 17) is est prévu un dispositif (23) pour obtenir un décalage parallèle qui décale à nouveau, en retour, la reproduction dans le sens opposé au décalage provoqué par le prisme rotatif, de façon à obtenir la coïncidence avec le chemin du faisceau lumineux du système de reproduction (18) qui ne présente pas de prisme rotatif.

2. Appareil de tirage de pellicule photographique en bobine selon la revendication 1, caractérisé en ce que le dispositif prévu pour obtenir un décalage parallèle contient un prisme losange (23a, b, c).

3. Appareil de tirage de pellicule photographique en bobine, selon la revendication 1 ou 2, caractérisé en ce que, dans le cas où l'on projette les tirages sur la bande (14) dans la direction longitudinale de la bande, le système de reproduction (13) prévu pour les formats plus petits, disposés transversalement, contient le prisme rotatif (16, 17).

4. Appareil de tirage de pellicule photographique en bobine, selon l'une des revendication précédentes, caractérisé en ce qu'il n'est prévu qu'une seule fenêtre d'image (4) pour au moins deux formats d'originaux; et en ce que pour le plus petit format, disposé transversalement par rapport à la bande d'originaux, c'est la partie de la fenêtre d'image (4) située du côté opposé au système de reproduction (13) correspondant que l'on utilise et en ce que la partie restante peut être obturée par un tiroir ou un volet (22).

5. Appareil de tirage de pellicule photographique en bobine selon la revendication 4, caractérisé en ce qu'il est prévu un capot (5) de lampe avec un puits réfléchissant (8) dont la surface de sortie correspond à peu près au plus grand format et dont une paroi (8a) du puits peut, à son extrémité supérieure, pivoter autour d'un axe (10) parallèle au plan des originaux pour venir dans une position dans laquelle elle concentre la lumière sur le plus petit format.

6. Appareil de tirage de pellicule photographique en bobine selon la revendication 1, caractérisé en ce que, comme mécanisme permettant d'obtenir un décalage parallèle des deux reproductions, on prévoit, sur la platine des originaux, deux fenêtres d'image (4a, 4b) décalées l'une par rapport à l'autre dans la direction d'avancement de la bande en correspondance avec les différents formats d'originaux, décalage qui correspond exactement au décalage du faisceau lumineux à travers le prisme rotatif (16, 17).

7. Appareil de tirage de pellicule photographique en bobine selon la revendication 6, caractérisé en ce que les deux fenêtres d'image (4a, 4b) sont éclairées par un dispositif d'éclairage commun (5).

8. Appareil de tirage de pellicule photographique en bobine selon la revendication 7, caractérisé en ce que l'on peut faire passer le dispositif d'éclairage (5) de l'une (4a) des fenêtres d'image sur l'autre (4b) des fenêtres d'image, ou bien que l'on peut déplacer l'ensemble du dispositif d'éclairage de la valeur du décalage.

9. Appareil de tirage de pellicule photographique en bobine selon la revendication 7 ou 8, caractérisé en ce que le dispositif d'éclairage (5) contient un puits réfléchissant (8) qui arrive jusqu'à la fenêtre d'image (4a, 4b) et qui, pour permettre le passage d'une fenêtre à l'autre, présente une cloison (8a) de division du puits que est réfléchissante sur les deux faces et qui peut pivoter, autour d'une axe (10) situé entre les deux fenêtres d'image (4a, 4b), pour passer d'une position en appui contre l'une des parois du puits à une position en appui contre la paroi opposée du puits.

10. Appareil de tirage de pellicule photographique en bobine selon l'une des revendications 7 à 9, caractérisé en ce que le puits réfléchissant (8) est dissymétrique dans la direction d'avancement de la bande de façon telle que le puits utilisé pour le plus grand format d'original, qui se présente le plus fréquemment, est cylindrique à base rectangulaire, tandis que la lumière est déviée latéralement pour le plus petit format d'original, qui se présente plus rarement.

11. Appareil de tirage de pellicule photographique en bobine selon l'une des revendications précédentes, caractérisé en ce qu'il est prévu un dispositif de détection (2) pour détecter les repères de format sur le côté du film ou la distance des encoches d'image, dispositif qui, par l'intermédiaire d'éléments de positionnement appropriés, commande l'échange des systèmes de reproduction (13, 18), le changement de position de la paroi mobile (8a) du puits réfléchissant et le positionnement des originaux dans la fenêtre d'image (4, 4a, 4b) respectivement utilisée.

FIG. 2

FIG. 1

FIG. 4

FIG. 3